# EUROPÄISCHE PATENTSCHRIFT

(11) **EP 2 791 287 B1**
(45) Veröffentlichungstag und Bekanntmachung des Hinweises auf die Patenterteilung: **02.03.2016**
(21) Anmeldenummer: 12813755.1
(22) Anmeldetag: 07.12.2012
(51) Int. Cl.: C10J 3/20, C01B 3/02, C10J 3/22, C10K 1/02, C10J 3/84

(54) **AUTOTHERMES VERFAHREN ZUR KONTINUIERLICHEN VERGASUNG VON KOHLENSTOFFREICHEN SUBSTANZEN IN EINEM VERTIKALEN PROZESSRAUM**
AUTOTHERMAL PROCESS FOR THE CONTINUOUS GASIFICATION OF CARBON-RICH SUBSTANCES IN A VERTICAL PROCESS CHAMBER
PROCÉDÉ AUTHOTHERMIQUE POUR LA GAZÉIFICATION CONTINU DE MATIÈRES RICHES EN CARBONE DANS UNE CHAMBRE DE TRAITEMENT VERTICALE

(30) Priorität: 16.12.2011 DE 102011121508
(43) Veröffentlichungstag der Anmeldung: 22.10.2014
(73) Patentinhaber: Ecoloop GmbH, 38640 Goslar (DE)
(72) Erfinder: MÖLLER, Roland, 38667 Bad Harzburg (DE); BAUMANN, Leonhard, 94501 Aldersbach (DE)
(74) Vertreter: Patentanwälte Olbricht Buchhold Keulertz
(86) Internationale Anmeldenummer: PCT/EP2012/005049
(87) Internationale Veröffentlichungsnummer: WO 2013/087172

(56) Entgegenhaltungen:
- WO-A1-02/48292
- WO-A1-99/37739
- DE-A1-102007 062 414

## Beschreibung

Die vorliegende Erfindung befasst sich mit einem autothermen Verfahren zur kontinuierlichen Vergasung von kohlenstoffreichen Substanzen in einem vertikalen Prozessraum mit einer Reduktionszone und einer Oxidationszone, in welcher die in der Reduktionszone kalzinierten kohlenstoffreichen Substanzen mit sauerstoffhaltigem Gas oxidieren, wobei die gasförmigen Reaktionsprodukte an der Oberseite des vertikalen Reaktionsraumes abgezogen werden, der vertikale Prozessraum in der Form eines Vertikalschachtofens ausgebildet wird, der von einem Schüttgut, das selbst nicht oxidiert wird, kontinuierlich von oben nach unten durchströmt wird, und die kohlenstoffreichen Substanzen dem Schüttgut vor dem Eintritt in den Ofen beigegeben werden.

Derartige Verfahren sind bereits bekannt und werden beispielsweise in Gegenstromvergasern durchgeführt, bei denen Kohleprodukte oder auch Biomasse, die zum Boden des Vergasers bewegt werden, im Gegenstrom von den entstehenden Prozessgasen umströmt werden. Die entstehenden Prozessgase können unmittelbar verbrannt oder für chemische Synthesen eingesetzt werden. Nachteilig bei dem beschriebenen Verfahren ist, dass es sich durch die zugeführten kohlenstoffreichen Substanzen zwar autotherm durchführen lässt, die Prozessgase aber in starkem Maße von den jeweils zugeführten kohlenstoffreichen Substanzen abhängen und entsprechend das Verfahren schwer zu steuern ist. Gänzlich ungeeignet ist das Verfahren bei kontaminierten kohlenstoffreichen Substanzen, wie z. B. fluor- und chlorhaltigen Kunststoffen, kontaminierten Abfällen oder dergleichen.

Bekannt ist bereits die Verwendung von Rest- und Abfallstoffen in Elektroniederschachtöfen, wobei unter sehr hohen Temperaturen die Herstellung von Kalziumkarbid, Ferrosilicium, Ferrochrom und dergleichen energetisch günstiger gestaltet werden kann. Ein solches Verfahren arbeitet allerdings nicht autotherm sondern es ist zur Erzeugung der benötigten hohen Temperaturen ein erheblicher Energieeinsatz mittels selbstbrennender oder selbstbackender Elektroden erforderlich. Ein solches Verfahren ist beispielsweise in der DE 10 2006 023 259 A1 beschrieben und ist unmittelbar mit der Herstellung der zuvor genannten Stoffe verknüpft.

Ein Verfahren der eingangs genannten Art ist aus der AT 387 786 B bekannt, die die Verwendung eines selbst nicht oxidierten, im Kreislauf geführten Schüttgutes beschreibt.

In DE 102007062414.1-24 ist ein Verfahren der eingangs genannten Art zur Vergasung kohlenstoffreicher Substanzen beschrieben, das die Umwandlung unterschiedlichster Kohlenstoffträger unter Nutzung eines Gegenstromvergasers in Synthesegas vorschlägt. Dieses Verfahren nutzt ein im Kreislauf geführtes Schüttgut als Reaktionswanderbett, wobei vorzugsweise alkalische Stoffe, insbesondere Calciumoxid (CaO) als Feingut zugesetzt werden, oder gar das gesamte Schüttgut aus CaO besteht. Ein weiteres wesentliches Merkmal dieses Verfahrens besteht in der Ausbildung einer Kühlzone, in der die notwendigen Vergasungsmittel, wie beispielsweise Luft und/oder Wasser energieeffizient vorgewärmt werden, während das im Kreislauf geführte Schüttgut abgekühlt wird. Dadurch kann zwar eine sehr hohe Energieeffizienz erreicht werden, nachteilig ist allerdings, dass nur bei der Verwendung von Luft eine für das Verfahren ausreichende Menge an Kühlgas bereitgestellt werden kann, um das gesamte Schüttgut ausreichend abzukühlen. Insbesondere bei der vorteilhaften Kreislaufführung des Schüttgutes ist jedoch eine weitgehende Abkühlung in der Kühlzone notwendig, da nur dann eine Abtrennung des schadstoffbeladenen Feingutes und die erneute Vermischung mit kohlenstoffreichen Substanzen, beispielsweise Kunststoffen, sinnvoll möglich ist. Der hohe Stickstoffanteil in der Luft gelangt dabei zwangsläufig als Inertgasanteil in das Synthesegas wodurch dessen Heizwert massiv reduziert, und dessen Verwendbarkeit als Syntheserohstoff bzw. Energieträger eingeschränkt wird. Es entsteht ein sogenanntes Schwachgas, bei dessen Einsatz als Energieträger nur noch reduzierte Flammtemperaturen erreicht werden können und gleichzeitig wegen der wesentlich höheren Gasmengen zumeist geometrische Erweiterungen von Rohrleitungs- und Brennersystemen notwendig werden.

Aus der WO 02/48292 A1 ist ein Verfahren zur Vergasung von kohlenstoffhaltigem Material bekannt, bei welchem rückgewonnenes Gas dem Reaktor zugeführt wird.

Für die vorliegende Erfindung hat sich daher die Aufgabe gestellt, Verfahren der oben beschriebenen Art dahingehend zu verbessern, dass auch hochwertige Synthesegase mit minimalem Inertgasanteil hergestellt werden können, ohne dabei die Energieeffizienz der Gegenstromvergasungsverfahren negativ zu beeinflussen.

Diese Aufgabe wird in einem Verfahren der eingangs genannten Art dadurch gelöst, dass Kohlenmonoxid-haltiges Gas wenigstens teilweise als Kühlgas in eine Kühlzone am unteren Ende des Vertikalschachtofens eingeleitet wird.

Es hat sich gezeigt, dass die Verwendung von Kohlenmonoxidhaltigem Gas, insbesondere Synthesegas, als Kühlmedium eine effiziente Abkühlung des Schüttgutes in der Kühlzone gewährleistet. Dabei können die abgezogenen gasförmigen Reaktionsprodukte, als Synthesegas verwendet werden, sodass ein verfahrensinterner Teilkreislauf des Synthesegases durchgeführt wird. Als besonders vorteilhaft hat sich dabei herausgestellt, dass üblicherweise im Synthesegas vorhandene Anteile an Kohlendioxid durch die Kreislaufführung durch erneuten Kontakt mit Kohlenstoff in der Reduktionszone des Gegenstromvergasers signifikant reduziert werden können, indem sich diese zumindest teilweise wieder durch Boudouard-Reaktion in Kohlenmonoxid umwandeln.

Eine weitere Ausführungsform der Erfindung kann auch darin bestehen, als Kühlgas zumindest teilweise auch Prozessgase aus carbothermischen Verfahren, beispielsweise aus Hochöfen zur Roheisenherstellung oder dem Verkokungsprozess von Kohle einzusetzen. Ebenso können auch Prozessgase aus elektrothermischen Verfahren, beispielsweise aus Elektroniederschachtöfen zur Calciumcarbidherstellung eingesetzt werden.

Vorzugsweise besitzt das Schüttgut im vertikalen Prozessraum eine Korngröße von bis zum 30 cm. Es hat sich gezeigt, dass bei derartigen Korngrößen leicht eine stabile, kontinuierlich in Bewegung zu haltende Schüttung erreichbar ist, die gleichzeitig eine hinreichende Gasdurchlässigkeit für den Gasgegenstrom besitzt.

In einer Weiterbildung des Verfahrens ist vorgesehen, dass das Schüttgut im vertikalen Prozessraum ganz oder teilweise aus alkalischen Stoffen, beispielsweise aus grobstückigem Calciumoxid besteht, und/oder diesem alkalische Stoff, beispielsweise grobstückiges Calciumoxid oder staubförmiges Calciumoxid und/oder Calciumhydroxid zugeschmischt werden.

In grobstückiger Form erlauben diese Stoffe eine ausreichende Gasdurchlässigkeit des Wanderbettreaktors, wobei sich diese Stoffe zur Bindung von Schadstoffen, wie beispielsweise Schwefel, Halogenen oder Schwermetallen eignen. Besonders bevorzugt ist die feinkörnige oder staubförmige Ausbildung, da in diesen Fällen eine erheblich größere Reaktionsoberfläche erreichbar ist und auch alkalische Stoffe als Schadstoffbinder in der Gasphase zur Verfügung gestellt werden.

Beim Einsatz von Calciumoxid bietet sich der Vorteil der katalytischen Wirkung bei der Vergasung organischer Materialien. Diese katalytische Wirkung reduziert die sonst bei der Vergasung oder Verkokung anfallenden öl- oder teerähnlichen Produkte auf ein Minimum, wobei gleichzeitig die thermische Spaltung bei tieferen Temperaturen einsetzt und zu einer deutlich erhöhten Synthesegasausbeute führt.

Weiterhin ist es vorteilhaft, wenn der vertikale Prozessraum eine Stützfeuerung im Bereich der Oxidationszone aufweist, die über Brennerlanzen mit Brennstoff und mit Oxidationsgas betrieben wird.

Die Stützfeuerung wird zum einen bei der Inbetriebnahme des Prozesses eingesetzt und erlaubt andererseits im standardisierten Betrieb die örtliche Fixierung der Oxidationszone im Schacht des Wanderbettreaktors. Die Steuerung kann dabei so erfolgen, dass das Oxidationsgas in Form von Luft und/oder Sauerstoff bezogen auf den Brennstoff in den Lanzen stöchiometrisch oder auch überstöchiometrisch erfolgen kann. Dadurch kann über die Lanzen auch die vollständige Dosierung der im Vergasungsprozess erforderlichen Oxidationsgasmenge erfolgen. Die erforderliche Oxidationsgasmenge im vorgeschalteten Wanderbettreaktor kann durch Zugabe von Luft und/oder technischem Sauerstoff erfolgen, wobei die Luft- bzw. Sauerstoffmenge so eingestellt wird, dass sich über alle Stufen der Vergasung ein Gesamtlambda von < 1, vorzugsweise < 0,7 und besonders bevorzugt < 0,5 ergibt. Es versteht sich, dass bei gegen Luft erhöhtem Sauerstoffanteil der Oxidationsgasmenge der Gasdurchsatz im Reaktor insgesamt vermindert werden kann und bei geschlossenem Kreislauf auch keine Stickstoffanreicherung zu befürchten ist.

Um die Bildung von öl- und teerhaltigen Spaltprodukten durch die katalytische Wirkung des Calciumoxids weitestgehend zu reduzieren, kann im vertikalen Prozessraum und/oder in der Gasphase der abgezogenen gasförmigen Reaktionsprodukte in Gegenwart von Wasserdampf und Calciumoxid und/oder Calciumcarbonat und/oder Calciumhydroxid eine calciumkatalysierte Reformierung oberhalb von 400°C durchgeführt werden. Dabei werden wesentliche Anteile der entstehenden öl- und/oder teerhaltigen Spaltprodukte, die eine Kettenlänge von > C₄ aufweisen, zu Kohlenmonoxid, Kohlendioxid und Wasserstoff umgewandelt. Der benötigte Wasserdampf kann dabei gezielt in den vertikalen Prozessraum und/oder in die Gasphase oberhalb der Reduktionszone eindosiert werden. Vorteilhaft ist auch eine Ausführungsform, bei der Wasserdampf aus der Restfeuchte der organischen Materialien in situ bereitgestellt wird. In diesem Fall kann ggf. ganz auf eine Dosierung von Wasser verzichtet werden.

Die abgezogenen gasförmigen Reaktionsprodukte werden vorzugsweise zumindest teilweise über einen Wärmetauscher abgekühlt, bevor die Rückführung in die Kühlzone erfolgt. Vorzugsweise wird vor der Abkühlung zunächst mittels physikalischer Trennmethoden, beispielsweise über eine Filteranlage, der Staub abgetrennt. Der gezielte Wärmeentzug vor dem Einleiten in die Kühlzone verbessert den Gesamtwirkungsgrad der Anlage und ist ein weiterer Schritt, zur Gesamtoptimierung des Prozesses.

Kommt technischer Sauerstoff zum Einsatz, wird dieser beispielsweise über physikalische, vorzugsweise durch elektrischen Strom betriebene Trennverfahren, beispielsweise durch destillative Luftzerlegung, Druckwechselabsorbtion oder Membrantrennungsverfahren aus der Luft isoliert und vorzugsweise in verflüssigter Form zwischengespeichert. Alternativ kann der technische Sauerstoff auch über elektrochemische Verfahren gewonnen werden, vorzugsweise durch die Elektrolyse von Wasser und/oder Kohlendioxid, wobei er auch dann vorzugsweise wieder in verflüssigter Form zwischengespeichert wird.

Vorzugsweise wird der Heizwert der gasförmigen Reaktionsprodukte über den Sauerstoffgehalt des sauerstoffhaltigen Gases mittels Einstellung des Verhältnisses von technischem Sauerstoff und Luft eingestellt.

Je nach gewähltem Trennungsverfahren, kann bei der Herstellung des technischem Sauerstoffs aus Luft auch technischer Stickstoff gewonnen werden, der ebenfalls in flüssiger Form in Tankbehältern zwischengespeichert wird, wobei bei anderen Verfahren auch technischer Wasserstoff und/oder Kohlenstoff gewonnen werden können, wie dies bei der Elektrolyse von Wasser und/oder Kohlendioxid der Fall ist, wobei der Wasserstoff ebenfalls in gasförmiger Form und der Kohlenstoff in fester Form zwischengespeichert werden.

Durch die Möglichkeit, die physikalischen Trennverfahren und/oder elektrochemischen Verfahren mit Hilfe elektrischen Stromes durchzuführen, ist es in einer bevorzugten Weiterbildung des Verfahrens möglich, diesen elektrischen Strom aus dem Überschussstrom aus der wetterabhängigen Stromerzeugung über Windkraft und/oder Sonnenenergie zu gewinnen, da die isolierten Stoffe sich in verflüssigter, gasförmiger oder fester Form gut in Lagertanks für die Durchführung des erfindungsgemäßen Verfahrens zwischenlagern lassen, so dass temporär auftretende Energieüberhänge im Rahmen nationaler und/oder globaler Energiekonzepte gut ausgeglichen werden können.

Der zuvor erwähnte, je nach Gewinnungsverfahren für den technischen Sauerstoff auch gewonnene Stickstoff kann als Inertisierungsgas für An- und Abfahrzwecke des Prozesses und/oder zur Abreinigung von Filtersystemen mittels Gasimpulsen genutzt werden, selbstverständlich sind aber auch Nutzungen im Rahmen sonstiger industrieller Anwendungen möglich.

Die abgezogenen gasförmigen Reaktionsprodukte können wenigstens teilweise als Verdünnungsgas über die Brennerlanzen in die Oxidationszone eingebracht werden, wobei die zurückgeführte Menge der gasförmigen Reaktionsprodukte vorzugsweise über die Temperatur in der Oxidationszone des vertikalen Prozessraums als Steuergröße geregelt wird. Die als Kühlgas zurückgeführte Menge an gasförmigen Reaktionsprodukten in die Kühlzone wird vorzugsweise über die Temperatur des Schüttgutes am unteren Ausgang des vertikalen Prozessraums geregelt.

Die gasförmigen Reaktionsprodukte werden vorzugsweise mittels Gasverdichter aus dem vertikalen Prozessraum abgezogen, der dann für die zumindest teilweise Rückführung der gasförmigen Reaktionsprodukte in die Oxidationszone und/oder Kühlzone des vertikalen Prozessraums und/der zur Fortleitung der gasförmigen Reaktionsprodukte zu einer nachgeschalteten Verwertung oder zu einem Gaspufferbehälter genutzt wird, wobei die Rückführung der gasförmigen Reaktionsprodukte vorzugsweise weiterhin über einen Gasverdichter, beispielsweise aus einem Gaspufferbehälter erfolgt. In der Kühlzone kann zusätzlich Wasser als Kühl- und/oder Vergasungsmittel eingesetzt werden.

Um eine Anreicherung von Schadstoffen in dem Prozess auf Dauer zu vermeiden, ist es bevorzugt, dass Schüttgut nach Verlassen der Kühlzone wenigstens von Zeit zu Zeit durch physikalische Trennmethoden, vorzugsweise durch Siebung und/oder Sichtung in verschiedene Kornfraktionen aufzutrennen und vorzugsweise die Feinfraktion, die die gebundenen Schadstoffe enthält, wenigstens teilweise aus dem Prozess auszuschleusen.

Nachfolgend wird anhand der beigefügten Abbildung näher auf eine Ausführungsform des Verfahrens eingegangen.

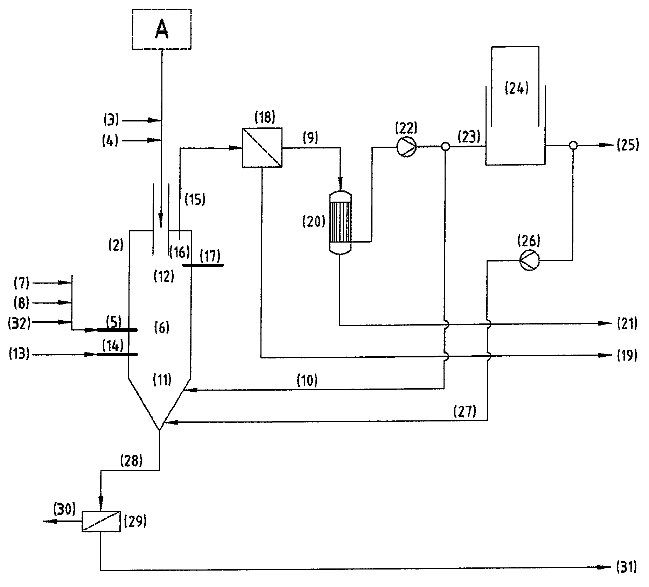

Figur 1 zeigt beispielhaft eine bevorzugte Ausgestaltung des erfindungsgemäßen Verfahrens. Diese soll das Verfahren erläutern, aber nicht einschränken.

Eine Mischung aus kohlenstoffreichen Substanzen (A) wird in grobstückiger Form und einer Korngröße von kleiner als 30 cm einem Gegenstromvergaser (2), der als vertikaler Prozessraum ausgebildet ist, von oben über eine vertikale Schurre zugeführt. Diesen kohlenstoffreichen Substanzen wird vor Eintritt in den Gegenstromvergaser (2) grobstückiges Schüttgut (3), beispielsweise grobstückiges Calciumoxid, zugemischt. Zur späteren Bindung der in den organischen Materialien enthaltenen Schadstoffe wie beispielsweise Chlor und Schwermetalle, werden alkalische Stoffe (4), vorzugsweise feinkörniges Calciumoxid dem Schüttgutwanderbett vor Eintritt in den Gegenstromvergaser (2) beigemischt.

Das Gemisch aus kohlenstoffreichen Substanzen, grobstückigem Calciumoxid und alkalischen Stoffen durchströmt den vertikalen Prozessraum (2) durch eigene Schwerkraft von oben nach unten. Der Gegenstromvergaser weist im mittleren Bereich Brennerlanzen (5) auf, die für eine Grundlastfeuerung im vertikalen Prozessraum und für die stationäre Ausbildung einer Oxidationszone (6) sorgen. Diese Brennerlanzen können mit fossilen Brennstoffen (7) und sauerstoffhaltigem Gas (8) betrieben werden. Alternativ zu den fossilen Brennstoffen kann auch Synthesegas aus dem Gegenstromvergaser (9) eingesetzt werden.

Am unteren Ende des vertikalen Prozessraums wird Synthesegas (10) als Kohlenmonoxid-haltiges Gas aus dem Gegenstromvergaser (2) als Kühlgas eingeleitet. Dieses Gas dient zunächst zur Abkühlung des Schüttgutes vor Verlassen des vertikalen Prozessraums in einer Kühlzone (11). Dabei wird das Synthesegas vorgewärmt, während es weiter im vertikalen Prozessraum nach oben strömt.

Die Brennerlanzen (5) werden so betrieben, dass die Menge an sauerstoffhaltigem Gas (8) überstöchiometrisch bezogen auf den Brennstoff (7) eingesetzt wird. Aufgrund des daraus resultierenden Sauerstoffüberschusses in der Oxidationszone wird das aus der Kühlzone (11) in die Oxidationszone (6) einströmende Synthesegas zumindest teilweise verbrannt und bildet dabei weiteres Kohlendioxid und Wasserdampf. Dabei wird durch die freiwerdende Reaktionswärme die für den Vergasungsprozess notwendige Energie zur Verfügung gestellt.

Entsprechend dem Gegenstromvergasungsprinzip reagiert das Kohlendioxid und der Wasserdampf aus der Synthesegasverbrennung in der mit dem aus den organischen Materialien entstehenden Koks in der Reduktionszone (12) unter Bildung von Kohlenmonoxid und Wasserstoff.
Die Synthesegasmenge wird so eingestellt, dass einerseits das Schüttgutwanderbett in der Kühlzone (11) vollständig abgekühlt und restliche Glutnester gelöscht werden, und andererseits ein möglichst hoher Anteil der notwendigen Prozessenergie über das Synthesegas gedeckt wird.

Die über die Brennerlanzen (5) eingeleitete Menge an sauerstoffhaltigem Gas wird so eingestellt, dass sich im vertikalen Prozessraum ein Gesamtlamda von vorzugsweise kleiner 0,5 einstellt. Dadurch bildet sich zunächst eine Oxidationszone (6) aus, in der brennbare Anteile des Gichtgases und Reste des organischen Materials mit Sauerstoff zu CO₂ bzw. H₂ reagieren. Weiter oben im Prozessraum nimmt der Sauerstoff weiter ab, sodass schließlich nur noch Verschwelung zu CO stattfinden kann, bis noch weiter oben schließlich der gesamte Sauerstoff verbraucht ist und sich eine Reduktionszone (12) bei vollständig reduktiven Bedingungen ausbildet.

Betrachtet man umgekehrt den Fluss des Schüttgutgemisches bestehend aus kohlenstoffreichen Substanzen, Calciumoxid und alkalischen Stoffen von oben nach unten, so findet in der Reduktionszone (12) zunächst eine Trocknung der möglicherweise feuchten Einsatzmaterialien bis zu einer Eigentemperatur von 100 °C statt. Danach steigt die Eigentemperatur der Materialien weiter an, sodass der Vergasungsprozess der in den kohlenstoffreichen Substanzen beispielsweise auch enthaltenen Kunststoffen beginnt und bei einer Eigentemperatur von bis zu 500 °C die Bildung von Methan, Wasserstoff und CO einsetzt. Nach weitgehender Entgasung steigt die Eigentemperatur der Materialien durch die aus der Oxidationszone (6) aufsteigenden Heißgase weiter an, sodass die kohlenstoffreichen Materialien schließlich vollständig entgast sind und nur noch aus Restkoks, dem sogenannten Pyrolysekoks, und Ascheanteilen bestehen. Der Pyrolysekoks wird mit dem Schüttgut im vertikalen Prozessraum weiter nach unten transportiert, wo er bei Temperaturen oberhalb von 800 °C in der Reduktionszone (12) mit den CO₂-Anteilen aus der Oxidationszone (6) durch Boudouard-Umwandlung zumindest teilweise in CO umgewandelt wird. Ein Teil des Pyrolysekokses reagiert in dieser Zone auch gemäß der Wassergasreaktion mit Wasserdampf, der ebenfalls in den Heißgasen enthalten ist, unter Bildung von CO und Wasserstoff.

Reste des Pyrolysekokses werden schließlich in der Oxidationszone (6) mit dem über die Brennerlanzen einströmenden sauerstoffhaltigen Gas (8) bei Temperaturen unterhalb von 1800°C oxidiert und thermisch genutzt.

Das Schüttgutwanderbett gelangt zusammen mit den verbleibenden Ascheanteilen in die Kühlzone (11).

In die Kühlzone (11) kann auch Wasser (13) über Wasserlanzen (14) als weiteres Kühl- und Vergasungsmittel eindosiert werden.

Das im vertikalen Prozessraum gebildete Synthesegas wird am oberen Ende abgesaugt (15), sodass sich im oberen Gasraum (16) des vertikalen Prozessraums vorzugsweise ein leichter Unterdruck von 0 bis - 200 mbar einstellt.

Während des Vergasungsprozesses können, je nach Qualität der Einsatzstoffe, erhebliche Anteile an gasförmigen sauren Halogenhaltigen Gasen oder auch Halogene entstehen. Daher ist es vorteilhaft, wenn dem Schüttgutwanderbett vor Eintritt in den vertikalen Prozessraum alkalische Stoffe (4) zugemischt werden. Hierbei eignen sich besonders Metalloxide, Metallhydroxide oder Metallcarbonate, wobei der Einsatz von feinkörnigem Calciumoxid besonders bevorzugt ist, da dieses durch seine Reaktivität und große Oberfläche spontan mit den gebildeten gasförmigen Halogenverbindungen bzw. Halogenen reagiert und dabei feste Salze bildet, die ganz überwiegend zusammen mit dem abgesaugten Synthesegas aus dem vertikalen Prozessraum ausgetragen werden. Weiterhin können auch andere Schadstoffe, beispielsweise Chlor, Chlorwasserstoff oder auch flüchtige Schwermetalle sehr effektiv am Calciumoxid gebunden und in gleicher Weise aus dem Prozess ausgetragen werden.

Das abgesaugte Synthesegas enthält Staub, der im Wesentlichen aus den festen Salzen der Halogene, feinkörnigen alkalischen Stoffen, weiteren Schadstoffen und inerten Partikeln besteht. Das staubhaltige Synthesegas kann im Gasraum (16) des vertikalen Prozessraums oder nach Verlassen des vertikalen Prozessraums bei (15) in Gegenwart von Wasserdampf und feinkörnigem Calciumoxid bei Temperaturen von oberhalb 400 °C behandelt werden. Diese Temperatur kann durch entsprechende Einstellung der Menge an sauerstoffhaltigem Gas (8) oder durch die Heizleistung der Brennerlanzen (5) in der Oxidationszone (6) eingestellt werden. Besonders vorteilhaft ist jedoch die Verwendung einer Direktfeuerung in das Synthesegas über Brennerlanzen (17), die stöchiometrisch mit Brennstoff und sauerstoffhaltigem Gas oder auch mit einem Überschuss an sauerstoffhaltigem Gas betrieben werden. Diese thermische Nachbehandlung in Gegenwart von Wasserdampf und Calciumoxid gewährleistet die Spaltung von im Synthesegas noch in geringen Mengen vorhandenen Ölen und Teeren durch katalytische Wirkung des Calciumoxids.

Das staubhaltige Synthesegas wird anschließend bei Temperaturen oberhalb von 300 °C über eine Heißgasfiltration (18) vom Staub befreit. Der halogenhaltige Filterstaub (19) wird aus dem Prozess ausgeschleust. In einer bevorzugten Ausführungsform des Verfahrens ist es auch möglich, den Filterstaub zumindest teilweise wieder als feinkörnige alkalische Stoffe dem Schüttgut bei (4) beizumischen und dadurch eine teilweise Kreislauffahrweise des Filterstaubes zu betreiben.

Das resultierende Synthesegas (9) ist praktisch halogenfrei. Dieses wird mittels Gaskühler (20) abgekühlt und von Kondensaten befreit. Das anfallende Kondensat (21) kann zumindest teilweise wieder als Kühl- und Vergasungsmittel über die Wasserlanzen (14) im vertikalen Reaktionsraum eingesetzt werden.

Das im Gaskühler abgekühlte Synthesegas wird mittels Gasverdichter (22)aus dem Gegenstromvergaser (2) bei (15) abgezogen über Gasfilter (18) und Gaskühler (20) gesaugt und anschließend zur weiteren thermischen bzw. stofflichen Verwertung (23) gefördert.

Der Gasverdichter (22) kann auch optional für die Förderung des Synthesegasteilstroms (10) zur Nutzung als Kühlgas in der Kühlzone (11) genutzt werden. Diese Ausgestaltung des Verfahrens ist besonders vorteilhaft, da in diesem Fall der sonst notwendige Kühlgasverdichter entfallen kann.

Je nach Standortbedingungen und Art der Weiterverwertung des Synthesegases kann es vorteilhaft sein, das Synthesegas in einen Gasspeicherbehälter (24) zu leiten. Von dort kann das Synthesegas der weiteren Verwertung zugeführt werden (25). Weiterhin besteht auch die Option, mittels eines zusätzlichen Gasverdichters (26) die Dosierung des Synthesegasteilstroms (27) zur Nutzung als Kühlgas in der Kühlzone (11) durchzuführen.

Das am unteren Ende des vertikalen Reaktionsraums austretende Schüttgutgemisch (28) enthält im Wesentlichen grobkörniges Schüttgut, Reste an Aschen und feinkörniges Calciumoxid.
Zur Entfernung gebundener Schadstoffe und der Aschen ist es besonders bevorzugt eine Siebung (29) des Schüttgutgemisches (28) durchzuführen, wobei die Grobfraktion (30) vorzugsweise wieder als Schüttgut bei (3) im Gegenstromvergaser (2) eingesetzt wird.

Die feine Siebfraktion (31) enthält Reste an Aschen, gebundene Schadstoffe und feinkörniges Calciumoxid.
Hier ist es in einer bevorzugten Ausführungsform des Verfahrens möglich, die feine Siebfraktion zumindest teilweise wieder als feinkörnige alkalische Stoffe dem Schüttgut bei (4) beizumischen und dadurch eine teilweise Kreislauffahrweise der feinen Siebfraktion zu betreiben.

Eine besonders bevorzugte Ausführungsform des Verfahrens besteht darin, dass technischer Sauerstoff als sauerstoffhaltiges Gas bei (8) eingesetzt wird. Dadurch kann ein besonders heizwertreiches Synthesegas erzeugt werden. Um die bei der Oxidation von technischem Sauerstoff erhöhten Flammtemperaturen abzusenken kann es vorteilhaft sein, zusätzliches Synthesegas mittels des Gasverdichters (22) und oder des zusätzlichen Gasverdichters (26) direkt bei (32) mit in die Brennerlanzen zu dosieren.

## Patentansprüche

1. Autothermes Verfahren zur kontinuierlichen Vergasung von kohlenstoffreichen Substanzen (A) in einem vertikalen Prozessraum (2) mit einer Reduktionszone (12)und einer Oxidationszone (6), in welcher die in der Reduktionszone kalzinierten kohlenstoffreichen Substanzen mit sauerstoffhaltigem Gas (8) oxidieren, wobei die gasförmigen Reaktionsprodukte (15)an der Oberseite des vertikalen Prozessraumes abgezogen, der vertikale Prozessraum in der Form eines Vertikalschachtofens ausgebildet wird, der von einem Schüttgut (3), das selbst nicht oxidiert wird, kontinuierlich von oben nach unten durchströmt wird, wobei die kohlenstoffreichen Substanzen dem Schüttgut vor dem Antritt in den vertikalen Prozessraum beigegeben werden, **dadurch gekennzeichnet, dass** Kohlenmonoxid-haltiges Gas als Kühlgas (10) in eine Kühlzone (11) am unteren Ende des Vertikalschachtofens eingeleitet wird.

2. Verfahren nach Anspruch 1, **dadurch gekennzeichnet, dass** als Kühlgas wenigstens teilweise die abgezogenen gasförmigen Reaktionsprodukte, enthaltend Kohlenmonoxid, in die Kühlzone (11) eingeleitet werden.

3. Verfahren nach einem der vorhergehenden Ansprüche, **dadurch gekennzeichnet, dass** das Schüttgut (3) im vertikalen Prozessraum (2) eine Korngröße von bis zu 30 cm aufweist.

4. Verfahren nach einem der vorhergehenden Ansprüche, **dadurch gekennzeichnet, dass** das Schüttgut (3) im vertikalen Prozessraum (2) ganz oder teilweise aus alkalischen Stoffen, beispielsweise aus grobstückigem Calciumoxid besteht, und/oder diesem alkalische Stoffe (4), beispielsweise grobstückiges Calciumoxid, und besonders bevorzugt staubförmiges Calciumoxid und/oder Calciumhydroxid zugemischt werden.

5. Verfahren nach einem der vorhergehenden Ansprüche, **dadurch gekennzeichnet, dass** im vertikalen Prozessraum (2) und/oder in der Gasphase der abgezogenen gasförmigen Reaktionsprodukte (15) in Gegenwart von Wasserdampf und Calciumoxid und/oder Calciumcarbonat und/oder Calciumhydroxid eine Calcium-katalysierte Reformierung von wesentlichen Anteilen der entstehenden Öl- und/oder Teer-haltigen Spaltprodukte, die eine Kettenlänge von größer C4 aufweisen, zu Kohlenmonoxid, Kohlendioxid und Wasserstoff bei Temperaturen von oberhalb 400 °C durchgeführt wird.

6. Verfahren nach einem der vorhergehenden Ansprüche, **dadurch gekennzeichnet, dass** der vertikale Prozessraum (2) eine Stützfeuerung im Bereich der Oxidationszone (6) aufweist, die über Brennerlanzen (5) mit Brennstoff (7) und mit Oxidationsgas (8) betrieben wird.

7. Verfahren nach einem der vorhergehenden Ansprüche, **dadurch gekennzeichnet, dass** die abgezogenen gasförmigen Reaktionsprodukte (15) zumindest teilweise über einen Wärmetauscher (20) abgekühlt werden, bevor die Rückführung in die Kühlzone (11) erfolgt.

8. Verfahren nach Anspruch 7, **dadurch gekennzeichnet, dass** die abgezogenen gasförmigen Reaktionsprodukte (15) vor der Abkühlung über den Wärmetauscher (20) zunächst mittels physikalischer Trennmethoden, vorzugsweise über eine Filteranlage (18), von Staub befreit werden.

9. Verfahren nach einem der vorhergehenden Ansprüche, **dadurch gekennzeichnet, dass** als sauerstoffhaltiges Gas (8) technischer Sauerstoff und/oder durch technischen Sauerstoff angereicherte Luft eingesetzt wird.

10. Verfahren nach Anspruch **9, dadurch gekennzeichnet, dass** der technische Sauerstoff für das sauerstoffhaltige Gas (8) über physikalische, vorzugsweise durch elektrischen Strom betriebene Trennverfahren, beispielsweise durch destillative Luftzerlegung, Druckwechseladsorbtion oder Membrantrennungsverfahren aus der Luft isoliert, und vorzugsweise in verflüssigter Form zwischengespeichert wird.

11. Verfahren nach Anspruch 9, **dadurch gekennzeichnet, dass** der technische Sauerstoff für das sauerstoffhaltige Gas (8) über elektrochemische Verfahren, vorzugsweise durch Elektrolyse von Wasser und/oder Kohlendioxid gewonnen und vorzugsweise in verflüssigter Form zwischengespeichert wird.

12. Verfahren nach einem der Ansprüche 9 bis 11, **dadurch gekennzeichnet, dass** der Heizwert der gasförmigen Reaktionsprodukte (15) über den Sauerstoffgehalt des sauerstoffhaltigen Gases (8) mittels Einstellung des Verhältnisses von technischem Sauerstoff und Luft eingestellt wird.

13. Verfahren nach Anspruch 10, **dadurch gekennzeichnet, dass** aus der Luft neben technischem Sauerstoff parallel technischer Stickstoff, durch physikalische Trennmethoden gewonnen, und vorzugsweise in flüssiger Form in Tankbehältern zwischengespeichert wird.

14. Verfahren nach Anspruch 11, **dadurch gekennzeichnet, dass** aus Wasser und/oder Kohlendioxid neben technischem Sauerstoff parallel technischer Wasserstoff und/oder Kohlenstoff, durch Elektrolyse gewonnen, der Wasserstoff vorzugsweise in gasförmiger Form in Druckbehältern und/oder der Kohlenstoff in fester Form zwischengespeichert wird.

15. Verfahren nach einem der Ansprüchen 10 bis 14, **dadurch gekennzeichnet, dass** die physikalischen Trennverfahren und/oder die elektrolytische Gewinnung aus elektrischem Überschussstrom aus der wetterabhängigen Stromerzeugung über Windkraft und/oder Sonnenenergie betrieben, die isolierten Stoffe in verflüssigter, gasförmiger oder fester Form in Lagertanks zum Einsatz in dem Verfahren gepuffert.

16. Verfahren nach Anspruch 13, **dadurch gekennzeichnet, dass** der gewonnene Stickstoff im Verfahren als Inertisierungsgas für An- und Abfahrzwecke und/oder zur Abreinigung von Filtersystemen mittels Gasimpulsen.

17. Verfahren nach einem der vorhergehenden Ansprüche, **dadurch gekennzeichnet, dass** die abgezogenen gasförmigen Reaktionsprodukte (15) wenigstens teilweise als Verdünnungsgas (32) über die Brennerlanzen (5) in die Oxidationszone (6) eingebracht werden.

18. Verfahren nach Anspruch 17, **dadurch gekennzeichnet, dass** die als Verdünnungsgas (32)über die Brennerlanzen (5) zurückgeführte Menge der gasförmigen Reaktionsprodukte (15) über die Temperatur in der Oxidationszone (6) des vertikalen Prozessraums als Steuergröße geregelt wird.

19. Verfahren nach einem der vorhergehenden Ansprüche, **dadurch gekennzeichnet, dass** die als Kühlgas (10) zurückgeführte Menge an gasförmigen Reaktionsprodukten in die Kühlzone (11) über die Temperatur des Schüttgutes am unteren Ausgang (28) des vertikalen Prozessraumes geregelt wird.

20. Verfahren nach einem der vorhergehenden Ansprüche, **dadurch gekennzeichnet, dass** die gasförmigen Reaktionsprodukte mittels Gasverdichter (22) aus dem vertikalen Prozessraum abgezogen werden, der dann für die zumindest teilweise Rückführung der gasförmigen Reaktionsprodukte (10) in die Oxidationszone (6) und/oder Kühlzone (11) des vertikalen Prozessraums und/oder zur Fortleitung der gasförmigen Reaktionsprodukte zu einer nachgeschalteten Verwertung (25) und/oder zu einem Gaspufferbehälter (24) genutzt wird.

21. Verfahren nach einem der vorhergehenden Ansprüche, **dadurch gekennzeichnet, dass** die Rückführung der gasförmigen Reaktionsprodukte (27) über einen zusätzlichen Gasverdichter (26), vorzugsweise aus einem Gaspufferbehälter (24) erfolgt.

22. Verfahren nach einem der vorhergehenden Ansprüche, **dadurch gekennzeichnet, dass** in der Kühlzone (11) zusätzlich Wasser (13) als Kühl und/oder Vergasungsmittel eingesetzt wird.

23. Verfahren nach einem der vorhergehenden Ansprüche, **dadurch gekennzeichnet, dass** das Schüttgut (28) nach Verlassen der Kühlzone durch physikalische Trennmethoden (29), vorzugsweise durch Siebung und/oder Sichtung in verschiedene Kornfraktionen aufgetrennt, und vorzugsweise die Feinfraktion (31), enthaltend gebundene Schadstoffe, aus dem Prozess zumindest teilweise ausgeschleust wird.

24. Verfahren nach Anspruch 22, **dadurch gekennzeichnet, dass** die aus der Anwendung der physikalischen Trennmethode (29), resultierende Grobfraktion (30), zumindest teilweise wieder als Schüttgut im vorgeschalteten Wanderbettreaktor (2) bei (3) eingesetzt wird.

25. Verfahren nach einem der vorhergehenden Ansprüche, **dadurch gekennzeichnet, dass** als Kühlgas wenigstens teilweise Prozessgase aus carbothermischen Verfahren,enthaltend Kohlenmonoxid, beispielsweise Gichtgas aus Hochöfen zur Roheisenherstellung und/oder Koksgas aus Verkokungsprozessen von Kohle, in die Kühlzone (11) eingeleitet werden.

26. Verfahren nach einem der vorhergehenden Ansprüche, **dadurch gekennzeichnet, dass** als Kühlgas wenigstens teilweise Prozessgase aus elektrothermischen Verfahren,enthaltend Kohlenmonoxid, beispielsweise Ofengas aus Elektroniederschachtöfen zur Calciumcarbidherstellung, in die Kühlzone (11) eingeleitet werden.

## Claims

1. An autothermal process for continuous gasification of carbon-rich substances (A) in a vertical process chamber (2) having a reduction zone (12) and an oxidation zone (6), in which zone the carbon-rich substances calcined in the reduction zone oxidize with oxygen-containing gas (8), and the gaseous reaction products (15) are drawn off at the top of the vertical process chamber, the vertical process chamber being embodied in the form of a vertical shaft furnace, through which a bulk material (3), which itself is not oxidized, flows continuously from top to bottom, and the carbon-rich substances are added to the bulk material before it enters the vertical process chamber, **characterized in that** carbon monoxide-containing gas as cooling gas (10) is introduced into a cooling zone (11) at the lower end of the vertical shaft furnace.

2. The process of claim 1, **characterized in that** as the cooling gas, at least in part the drawn-off gaseous reaction products, containing carbon monoxide, are introduced into the cooling zone (11).

3. The process of one of the foregoing claims, **characterized in that** the bulk material (3) in the vertical process chamber (2) has a particle size of up to 30 cm.

4. The process of one of the foregoing claims, **characterized in that** the bulk material (3) in the vertical process chamber (2) entirely or in part comprises alkaline substances, for instance coarse calcium oxide, and/or for instance coarse calcium oxide and especially preferably powdered calcium oxide and/or calcium hydroxide are admixed with these alkaline substances (4).

5. The process of one of the foregoing claims, **characterized in that** in the vertical process chamber (2) and/or in the gas phase of the drawn-off gaseous reaction products (15), in the presence of water vapor and calcium oxide and/or calcium carbonate and/or calcium hydroxide, a calcium-catalyzed reformation of substantial proportions of the resultant oil- and/or tar-containing decomposition products, which have a chain length of greater than C₄, into carbon monoxide, carbon dioxide, and hydrogen is performed at temperatures of above 400°C.

6. The process of one of the foregoing claims, **characterized in that** the vertical process chamber (2) has a backup furnace in the vicinity of the oxidation zone (6), which backup furnace is operated via burner lances (5) with fuel (7) and with oxygen-containing gas (8).

7. The process of one of the foregoing claims, **characterized in that** the drawn-off gaseous reaction products (15) are at least partly cooled via a heat exchanger (20), before the return into the cooling zone (11) is effected.

8. The process of claim 7, **characterized in that** the drawn-off gaseous reaction products (15), before cooling via the heat exchanger (20), are first freed from dust by means of physical separation processes, preferably via a filter system (18).

9. The process of one of the foregoing claims, **characterized in that** as the oxygen-containing gas (8), technical oxygen and/or air enriched with technical oxygen is employed.

10. The process of claim 9, **characterized in that** the technical oxygen for the oxygen-containing gas (8) is isolated from the air via physical separation processes, preferably operated with electric current, for instance by means of distillated air decomposition, alternating-pressure adsorption, or membrane separation processes, and is preferably stored temporarily in liquefied form.

11. The process of claim 9, **characterized in that** the technical oxygen for the oxygen-containing gas is obtained via electrochemical processes, preferably by electrolysis of water and/or carbon dioxide, and preferably temporarily stored in liquefied form.

12. The process of one of claims 9-11, **characterized in that** the calorific value of the gaseous reaction products (15) is adjusted via the oxygen content of the oxygen-containing gas (8) by means of adjusting the ratio of technical oxygen and air.

13. The process of claim 10, **characterized in that** from the air, besides technical oxygen, technical nitrogen is obtained in parallel by physical separation processes and preferably stored in liquid form in tank containers.

14. The process of claim 11, **characterized in that** from water and/or carbon dioxide, besides technical oxygen, technical hydrogen and/or carbon is obtained in parallel by electrolysis, and the hydrogen is temporarily stored preferably in gaseous form in pressure vessels and/or the carbon is temporarily stored in solid form.

15. The process of one of claims 10-14, **characterized in that** the physical separation processes and/or the electrolytic obtaining operated from electric excess current from weather-dependent current generation via wind power and/or solar energy, the isolated substances buffer-stored in liquefied, gaseous or solid form in storage tanks for use in the process.

16. The process of claim 13, **characterized in that** the nitrogen obtained in the process as inertizing gas for startup and shutdown purposes and/or for cleaning filter systems by means of gas impulses.

17. The process of one of the foregoing claims, **characterized in that** the drawn-off gaseous reaction products (15) are introduced into the oxidation zone (6) at least in part as dilution gas (32) via the burner lances (5).

18. The process of claim 17, **characterized in that** the quantity of gaseous reaction products (15) returned as dilution gas (32) via the burner lances (5) is regulated via the temperature in the oxidation zone (6) of the vertical process chamber as an actuating variable.

19. The process of one of the foregoing claims, **characterized in that** the quantity of gaseous reaction products returned as cooling gas (10) into the cooling zone (11) is regulated via the temperature of the bulk material at the lower outlet (28) of the vertical process chamber.

20. The process of one of the foregoing claims, **characterized in that** the gaseous reaction products are drawn off from the vertical process chamber by means of a gas compressor (22), which is then used for the at least partial return of the gaseous reaction products (15) into the oxidation zone (6) and/or cooling zone (11) of the vertical process chamber and/or for carrying the gaseous reaction products further to a downstream utilization (25) and/or to a gas buffer container (24).

21. The process of one of the foregoing claims, **characterized in that** the return of the gaseous reaction products (27) is effected via an additional gas compressor (26), preferably from a gas buffer container (24).

22. The process of one of the foregoing claims, **characterized in that** in the cooling zone (11), water (13) is additionally used as a cooling and/or gasification medium.

23. The process of one of the foregoing claims, **characterized in that** the bulk material (28), after leaving the cooling zone, is separated into various particle fractions by physical separation methods (29), preferably screening and/or sifting, and preferably the fine fraction (31), containing bound pollutants, is at least partially transferred outward from the process.

24. The process of claim 22, **characterized in that** the coarse fraction (30) resulting from the use of the physical separation method (29) is at least partly re-used at (3) as bulk material in the upstream moving-bed reactor (2).

25. The process of one of the foregoing claims, **characterized in that** as the cooling gas, at least in part process gases from carbothermic processes, containing carbon monoxide, such as blast-furnace gas from blast furnaces for crude iron production and/or coke gas from coking processes of coal, are introduced into the cooling zone (11).

26. The process of one of the foregoing claims, **characterized in that** as the cooling gas, at least in part process gases from electrothermic processes, containing carbon monoxide, such as furnace gas from electronic low-shaft furnaces for calcium carbide production, are introduced into the cooling zone (11).

## Revendications

1. Procédé autotherme de gazéification continue de substances riches en carbone (A) dans un espace de processus vertical (2) avec une zone de réduction (12) et une zone d'oxydation (6), dans laquelle les substances riches en carbone calcinées dans la zone de réduction s'oxydent avec du gaz contenant de l'oxygène (8), dans lequel les produits de réaction gazeux (15) sont extraits sur le côté supérieur de l'espace de processus vertical, l'espace de processus vertical est réalisé sous la forme d'un four à cuve vertical qui est parcouru en continu du haut vers le bas par un produit en vrac (3) qui n'est lui-même pas oxydé, dans lequel les substances riches en carbone sont ajoutées au produit en vrac avant l'entrée dans l'espace de processus vertical, **caractérisé en ce que** du gaz contenant du monoxyde de carbone est introduit en tant que gaz de refroidissement (10) dans une zone de refroidissement (11) à l'extrémité inférieure du four à cuve vertical.

2. Procédé selon la revendication 1, **caractérisé en ce que** les produits de réaction gazeux extraits contenant du monoxyde de carbone sont introduits au moins partiellement dans la zone de refroidissement (11) en tant que gaz de refroidissement.

3. Procédé selon une des revendications précédentes, **caractérisé en ce que** le produit en vrac (3) dans l'espace de processus vertical (2) présente une granulométrie allant jusqu'à 30 cm.

4. Procédé selon une des revendications précédentes, **caractérisé en ce que** le produit en vrac (3) dans l'espace de processus vertical (2) se compose entièrement ou partiellement de substances alcalines, par exemple d'oxyde de calcium en gros morceaux, et/ou des substances alcalines (4), par exemple de l'oxyde de calcium en gros morceaux, et de manière particulièrement préférée de l'oxyde de calcium et/ou de l'hydroxyde de calcium pulvérulent, sont ajoutées à celui-ci.

5. Procédé selon une des revendications précédentes, **caractérisé en ce qu'**un reformage catalysé par du calcium de portions importantes des produits de craquage contenant du pétrole et/ou du goudron qui apparaissent, qui présentent une longueur de chaîne supérieure à C4, en monoxyde de carbone, dioxyde de carbone et hydrogène est effectué à des températures supérieures à 400°C dans l'espace de processus vertical (2) et/ou dans la phase gazeuse des produits de réaction gazeux extraits (15) en présence de vapeur d'eau et d'oxyde de calcium et/ou de carbonate de calcium et/ou d'hydroxyde de calcium.

6. Procédé selon une des revendications précédentes, **caractérisé en ce que** l'espace de processus vertical (2) présente un chauffage de support dans la région de la zone d'oxydation (6) qui est exploité par le biais de lances de chalumeau (5) avec du combustible (7) et avec du gaz d'oxydation (8).

7. Procédé selon une des revendications précédentes, **caractérisé en ce que** les produits de réaction gazeux extraits (15) sont refroidis au moins partiellement par le biais d'un échangeur de chaleur (20) avant que la réinjection n'ait lieu dans la zone de refroidissement (11).

8. Procédé selon la revendication 7, **caractérisé en ce que** les produits de réaction gazeux extraits (15) sont libérés de la poussière avant le refroidissement par le biais de l'échangeur de chaleur (20) d'abord au moyen de méthodes de séparation physiques, de préférence par le biais d'une installation de filtre (18).

9. Procédé selon une des revendications précédentes, **caractérisé en ce que** de l'oxygène technique et/ou de l'air enrichi par de l'oxygène technique est utilisé en tant que gaz contenant de l'oxygène (8).

10. Procédé selon la revendication 9, **caractérisé en ce que** l'oxygène technique pour le gaz contenant de l'oxygène (8) est isolé de l'air par le biais de procédés de séparation physiques, de préférence exploités par du courant électrique, par exemple par décomposition de l'air distillatoire, adsorption par changement de pression ou procédé de séparation membranaire, et de préférence stocké temporairement sous forme liquéfiée.

11. Procédé selon la revendication 9, **caractérisé en ce que** l'oxygène technique pour le gaz contenant de l'oxygène (8) est obtenu par le biais de procédés électrochimiques, de préférence par électrolyse d'eau et/ou de dioxyde de carbone, et de préférence stocké temporairement sous forme liquéfiée.

12. Procédé selon une des revendications 9 à 11, **caractérisé en ce que** le pouvoir calorifique des produits de réaction gazeux (15) est réglé par le biais de la teneur en oxygène du gaz contenant de l'oxygène (8) au moyen du réglage du rapport entre oxygène technique et air.

13. Procédé selon la revendication 10, **caractérisé en ce qu'**outre l'oxygène technique, de l'azote technique est obtenu parallèlement à partir de l'air, par des méthodes de séparation physiques, et de préférence stocké temporairement sous forme liquide dans des récipients de réservoir.

14. Procédé selon la revendication 11, **caractérisé en ce qu'**outre l'oxygène technique, de l'hydrogène et/ou du carbone technique est obtenu à partir de l'eau et/ou du dioxyde de carbone par électrolyse, l'hydrogène est de préférence stocké temporairement sous forme gazeuse dans des récipients sous pression et/ou le carbone est stocké temporairement sous forme solide.

15. Procédé selon une des revendications 10 à 14, **caractérisé en ce que** les procédés de séparation physiques et/ou l'obtention électrolytique sont exploités à partir de courant électrique en excès provenant de la génération de courant dépendant des intempéries par le biais de l'énergie éolienne et/ou de l'énergie solaire, les substances isolées sont tamponnées sous forme liquéfiée, gazeuse ou solide dans des réservoirs de stockage pour l'utilisation dans le procédé.

16. Procédé selon la revendication 13, **caractérisé en ce que** l'azote obtenu dans le procédé en tant que gaz d'inertisation à des fins de démarrage et de départ et/ou pour le nettoyage de systèmes de filtre au moyen d'impulsions gazeuses.

17. Procédé selon une des revendications précédentes, **caractérisé en ce que** les produits de réaction gazeux extraits (15) sont chargés au moins partiellement en tant que gaz de dilution (32) par le biais des lances de chalumeau (5) dans la zone d'oxydation (6).

18. Procédé selon la revendication 17, **caractérisé en ce que** la quantité des produits de réaction gazeux (15) réinjectée en tant que gaz de dilution (32) par le biais des lances de chalumeau (5) est régulée en tant que grandeur de commande par le biais de la température dans la zone d'oxydation (6) de l'espace de processus vertical.

19. Procédé selon une des revendications précédentes, **caractérisé en ce que** la quantité de produits de réaction gazeux réinjectée en tant que gaz de refroidissement (10) dans la zone de refroidissement (11) est régulée par le biais de la température du produit en vrac à la sortie inférieure (28) de l'espace de processus vertical.

20. Procédé selon une des revendications précédentes, **caractérisé en ce que** les produits de réaction gazeux sont extraits de l'espace de processus vertical au moyen d'un compresseur à gaz (22) qui est ensuite utilisé pour la réinjection au moins partielle des produits de réaction gazeux (10) dans la zone d'oxydation (6) et/ou zone de refroidissement (11) de l'espace de processus vertical et/ou pour la conduite des produits de réaction gazeux à une récupération placée en aval (25) et/ou à un récipient de tampon gazeux (24).

21. Procédé selon une des revendications précédentes, **caractérisé en ce que** la réinjection des produits de réaction gazeux (27) s'effectue par le biais d'un compresseur à gaz supplémentaire (26), de préférence depuis un récipient de tampon gazeux (24).

22. Procédé selon une des revendications précédentes, **caractérisé en ce que** de l'eau (13) est utilisée en outre en tant que moyen de refroidissement et/ou de gazéification dans la zone de refroidissement (11).

23. Procédé selon une des revendications précédentes, **caractérisé en ce que** le produit en vrac (28) est séparé après avoir quitté la zone de refroidissement par des méthodes de séparation physiques (29), de préférence par tamisage et/ou triage en différentes fractions de grain, et la fraction fine (31), contenant des polluants liés, est de préférence évacuée au moins partiellement du processus.

24. Procédé selon la revendication 22, **caractérisé en ce que** la fraction grossière (30) résultant de l'application de la méthode de séparation physique (29) est réutilisée au moins partiellement en tant que produit en vrac dans le réacteur à lit mobile (2) placé en amont en (3).

25. Procédé selon une des revendications précédentes, **caractérisé en ce que** des gaz de processus provenant de procédés carbothermiques, contenant du monoxyde de carbone, par exemple du gaz de haut fourneau provenant de hauts fourneaux pour la fabrication de fer brut et/ou du gaz de four à coke provenant de processus de cokéfaction de charbon, sont introduits au moins partiellement en tant que gaz de refroidissement dans la zone de refroidissement (11).

26. Procédé selon une des revendications précédentes, **caractérisé en ce que** des gaz de processus provenant de procédés électrothermiques, contenant du monoxyde de carbone, par exemple du gaz de fourneau provenant de bas fourneaux électriques pour la fabrication de carbure de calcium, sont introduits au moins partiellement en tant que gaz de refroidissement dans la zone de refroidissement (11).
